Europäisches Patentamt

European Patent Office

Office européen des brevets

(11) Numéro de publication: **0 082 063**
**A1**

## (12) DEMANDE DE BREVET EUROPEEN

(21) Numéro de dépôt: **82402228.9**

(22) Date de dépôt: **06.12.82**

(51) Int. Cl.³: **G 21 C 19/30**

(30) Priorité: **11.12.81 FR 8123204**

(43) Date de publication de la demande: **22.06.83**
**Bulletin 83/25**

(84) Etats contractants désignés: **BE DE FR GB IT NL**

(71) Demandeur: **STEIN INDUSTRIE Société anonyme dite:,
19-21, Avenue Morane Saulnier B.P. 74,
F-78141 Velizy-Villacoublay (FR)**

(72) Inventeur: **Peyrelongue, Jean-Pierre, 2, Square F.
Jammes, F-78760 Pontchartrain (FR)**

(74) Mandataire: **Mongrédien, André et al, c/o
BREVATOME 25, rue de Ponthieu, F-75008 Paris (FR)**

(54) **Dispositif de purification du métal liquide de refroidissement du coeur d'un réacteur nucléaire à neutrons rapides.**

(57) La purification est effectuée par filtration.

Les moyens de mise en circulation du métal liquide (19, 20) sont disposés par rapport à ses autres éléments de façon à assurer une circulation en siphon non vidangeable au-dessus du niveau (42) de métal liquide baignant le coeur du réacteur.

Application aux centrales de production d'énergie.

## Dispositif de purification du métal liquide de refroidissement du coeur d'un réacteur nucléaire à neutrons rapides

La présente invention concerne un dispositif de purification du métal liquide de refroidissement du coeur d'un réacteur nucléaire à neutrons rapides, comprenant une enveloppe calorifugée immergée dans la cuve du réacteur et suspendue à la dalle de protection surmontant celui-ci, un bouchon amovible disposé dans ladite enveloppe et permettant l'accès à l'intérieur de l'enveloppe, et à l'intérieur de celle-ci des moyens de refroidissement d'un courant de métal liquide prelevé dans le coeur du réacteur jusqu'à une température assurant la solidification des impuretés, des moyens de filtration du métal liquide refroidi, des moyens de retour dans la partie supérieure de l'enveloppe du métal purifié sortant des moyens de filtration, des moyens de réchauffement au moins partiel du métal purifié en échange de chaleur avec le métal à purifier, et une vanne de répartition du débit de métal liquide purifié entre une fraction passant par les moyens de réchauffement avant d'être renvoyée dans la cuve du réacteur, et une autre fraction renvoyée directement dans cette dernière, et des moyens assurant la circulation du métal liquide à travers ledit dispositif, du genre qui a fait l'objet de la demande de brevet français FR-A n° 2395 570.

Un tel dispositif est conçu de sorte que les moyens de filtration (appelés "cartouche filtrante") ne font pas partie intégrante du dispositif et sont seuls extraits du réacteur lorsque leur colmatage devient trop important, le reste du dispositif étant maintenu en place. Ceci entraîne une structure annulaire de l'enveloppe, relativement compliquée, une réduction du volume relatif de la cartouche par rapport à celui de l'enveloppe, et la présence d'un bouchon central particulier au-dessus de cette cartouche filtrante. Par ailleurs, la pompe électromagnétique assurant la circulation du sodium à purifier, le débitmètre de contrôle et l'échangeur de chaleur sont nécessairement dans le bas du dispositif, ce qui rend impossible leur réparation éventuelle sans manutention de l'ensemble de l'appareillage et dépose de sa virole extérieure. Enfin, la circulation du métal liquide s'effectue à partir d'un niveau libre, surmontant la cartouche dans le puits de l'enveloppe par où elle est manutentionnée, ce qui rend la conduite du dispositif très sensible aux variations de niveau et de température du métal liquide dans la cuve du réacteur, ou nécessite de lui faire parcourir un circuit compliqué si on veut maintenir le fonctionnement de la purification indépendant du niveau de métal liquide dans la cuve.

La présence de ce niveau libre conduit également à la vidange rapide de l'appareil en cas d'arrêt de la pompe, ce qui engendre des sollicitations thermiques importantes sur les structures de l'appareil.

La présente invention a pour but de remédier aux inconvénients ci-dessus, et de procurer un dispositif de purification possédant une structure plus simple permettant l'installation d'un volume de piégeage important, sans bouchon central au-dessus de la cartouche de filtration, qui comporte une pompe, un débitmètre de contrôle, un échangeur de chaleur et des moyens de régulation, qui assure une circulation du métal liquide en siphon sans niveau libre par un circuit simple insensible au niveau et à la température du métal liquide dans la cuve du réacteur, qui procure un débit de métal liquide purifié indépendant dans le temps du taux de colmatage, et qui ne se vidange pas en cas d'arrêt de la pompe.

Le dispositif selon la présente invention est essentiellement caractérisé en ce que les moyens assurant la circulation du métal liquide sont disposés par rapport à ses autres éléments de façon à assurer une circulation en siphon non vidangeable de ce métal liquide au-dessus du niveau de métal liquide baignant le coeur du réacteur nucléaire.

Il répond en outre de préférence à au moins l'une des caractéristiques suivantes :

- les moyens pour assurer une circulation en siphon du métal liquide à purifier comprennent une pompe électromagnétique

B 7506 77 A1

dont la partie électrique est accessible et démontable, disposée au-dessus des moyens de filtration et de réchauffement, et des moyens pour assurer et maintenir l'amorçage de cette pompe,

- les moyens de réchauffement du métal liquide purifié sont constitués par un échangeur à faisceau tubulaire disposé au-dessus de la zone supérieure des moyens de retour dans la partie supérieure de l'enveloppe du métal purifié sortant des moyens de filtration, dans une enceinte alimentée par la circulation du métal liquide à refroidir et purifier redescendant de la partie supérieure du siphon,

- la vanne de réglage du débit de métal liquide purifié renvoyé dans le coeur du réacteur est amovible et disposée à l'extérieur de l'enveloppe calorifugée,

- Il comprend un indicateur de bouchage donnant l'indication de la pureté du métal liquide, relié à la circulation de celui-ci en deux points proches de la pompe électromagnétique, en amont et en aval de celle-ci.

- la partie du dispositif située sous le niveau du métal liquide dans la cuve du réacteur est constituée uniquement par les moyens de filtration et leur isolation thermique

Il est décrit ci-après, à titre d'exemple et en référence aux figures du dessin annexé, un dispositif de purification du sodium liquide de refroidissement du coeur d'un réacteur nucléaire à neutrons rapides, et d'autres avantages du dispositif de l'invention apparaîtront à cette occasion.

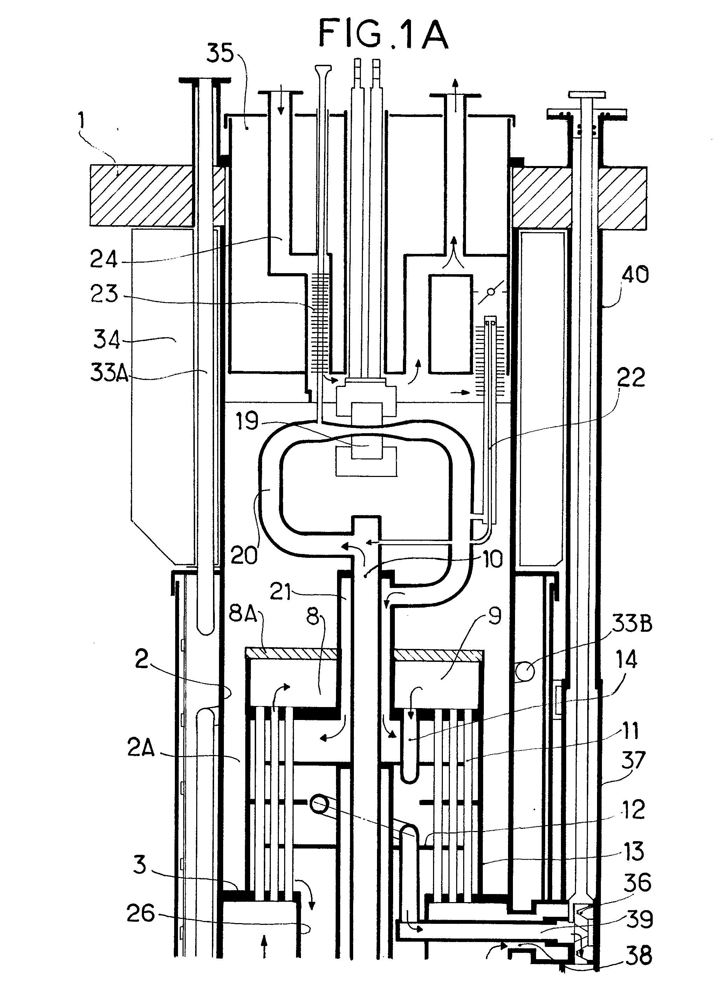

La figure 1A représente en coupe diamétrale la partie supérieure du dispositif, comprenant notamment le circuit en siphon et la pompe électromagnétique.

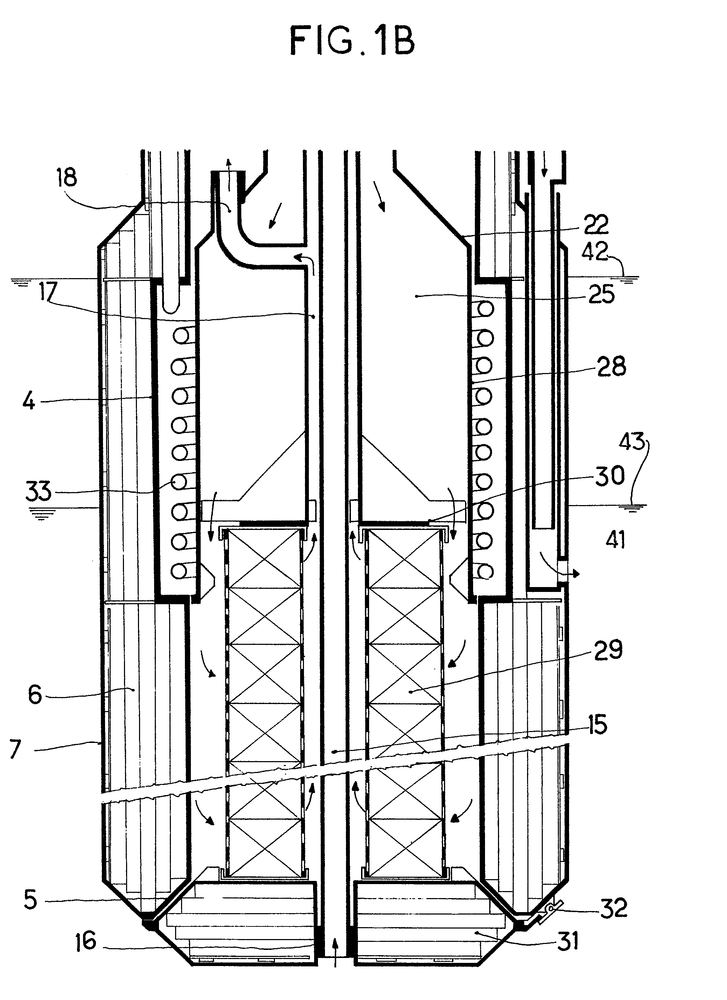

La figure 1B représente en coupe diamétrale la partie inférieure du dispositif, comprenant notamment les moyens de filtration du sodium liquide à purifier.

Le dispositif est supporté par une bride supérieure 1, qui repose sur la bride de la dalle surmontant la cuve du réacteur, non représentée. Le niveau maximal du sodium liquide dans la cuve est représenté en 42, et le niveau minimal en 43. Une virole

0082063

porteuse 2 descend de la bride-support 1 jusqu'à la plaque tubulaire inférieure (froide) de l'échangeur de chaleur 2A entre le sodium impur chaud et le sodium purifié refroidi, généralement appelé "économiseur".

En dessous de cet économiseur, la virole porteuse comporte un logement 4 pour un serpentin d'azote de refroidissement 33.

Dans sa partie inférieure, la virole porteuse comporte une portée conique 5 et se termine par un anneau assurant l'étanchéité avec le bouchon inférieur 31 et le supportage de la virole externe 7 du calorifuge. Celui-ci entoure la cartouche filtrante 29, le serpentin de refroidissement 33 et l'économiseur 2A sur toute leur hauteur. Dans l'exemple décrit, il se compose de panneaux cylindriques superposés 6 comportant alternativement des matelas de toile métallique et des tôleries anti-convection. Il est disposé à l'intérieur de la virole externe 7, qui constitue la paroi du dispositif au contact du sodium chaud de la cuve du réacteur. Cette virole est étanche sur toute sa partie inférieure au contact du sodium. Elle est ouverte dans sa partie supérieure pour permettre la circulation d'argon dans le calorifuge et éviter la montée en pression de celui-ci.

L'échangeur 2A entre le sodium impur chaud et le sodium purifié refroidi (économiseur) comporte deux plaques tubulaires annulaires 3, 8 reliées par les tubes d'échange 11, et une virole extérieure 13. La plaque tubulaire inférieure 3 est reliée à la virole porteuse 2. Elle supporte sur son pourtour intérieur la virole 26 d'une chambre 25 canalisant le sodium à purifier vers la cartouche filtrante 29.

La plaque supérieure 8 délimite avec la cloison supérieure 8A une chambre collectrice annulaire 9. Elles supportent sur leur diamètre intérieur la tête supérieure 10 du tube central 15 qui sert à l'alimentation du dispositif en sodium à purifier, qui, après refoulement par la pompe électromagnétique dans le canal annulaire 21, se refroidit autour des tubes 11 de l'économiseur.

Des chicanes 12 sur le trajet du sodium à purifier autour des tubes permettent d'améliorer le coefficient d'échange de chaleur dans l'économiseur.

Le conduit 14 de sortie du sodium purifié et réchauffé est relié à la plaque tubulaire supérieure 8. Il communique avec la vanne 36 de répartition du sodium purifié par un conduit radial 39, traversant la virole 26 de la chambre 25.

Le tube central 15, dans l'axe du dispositif de purification, est suspendu par sa tête supérieure 10 à l'ensemble de la plaque tubulaire supérieure 8 et de la cloison supérieure 8A. A son extrémité inférieure, un palier 16 assure l'étanchéité à la traversée du bouchon inférieur 31, pour éviter la sortie directe de sodium purifié sortant de la cartouche filtrante 29 dans la cuve du réacteur avant son réchauffement. Il est entouré au-dessus de la cartouche filtrante par le conduit annulaire 17 permettant la remontée vers l'économiseur du sodium purifié. Ce conduit s'appuie par l'intermédiaire de la plaque circulaire 30 sur l'empilement des tampons filtrants de la cartouche pour éviter toute dérivation du sodium impur descendant dans la chambre 25 et l'obliger à traverser en totalité les tampons filtrants. Il est fermé à son extrémité supérieure et fixé au tube central 15 au niveau de l'économiseur. Une tubulure 18 raccordée à ce conduit traverse la partie conique 27 de la virole 26 et débouche sous la plaque tubulaire inférieure 3 de l'économiseur. Elle assure l'alimentation des tubes de l'économiseur en sodium purifié froid.

La pompe électromagnétique 19, par exemple du type à induction, est disposée sur une tuyauterie 20 formant siphon partant de la tête du tube central 15 et alimentant l'économiseur en sodium impur chaud par le conduit annulaire 21 raccordant la tête du tube central, la plaque tubulaire supérieure 8 et la cloison circulaire 8A. On notera que sa position en un point haut de l'appareil, au-dessus des étanchéités du haut du réacteur, permet l'inspection, le démontage et la réparation de son circuit électrique sans démontage de l'appareil.

Sur la tuyauterie 20 sont branchés deux circuits :

- le circuit de l'indicateur de bouchage 22, branché de part et d'autre de la pompe

- un circuit de mise sous vide 23 pour l'amorçage du siphon et de la pompe.

Elle est refroidie par le circuit de gaz 24 traversant les protections biologiques supérieures, qui sert au refroidissement de l'indicateur de bouchage.

La chambre 25 assure la circulation du sodium à purifier sortant de l'économiseur vers la cartouche filtrante. Elle est entourée d'une virole 26 comportant une partie tronconique 27 et une partie cylindrique 28 entourée par le serpentin de refroidissement 33. Cette dernière est reliée à son extrémité inférieure au fond du logement du serpentin dans la virole porteuse 2 par un accouplement glissant.

La virole 26 est traversée de façon étanche, d'une part par la tubulure 18 de sortie du sodium purifié revenant vers l'économiseur, d'autre part par le conduit radial 39 de sortie du sodium réchauffé dans l'économiseur retournant vers la vanne de répartition 36 et la cuve du réacteur.

La cartouche filtrante 29 est constituée par un empilement de tampons filtrants annulaires contenus entre deux viroles perforées cylindriques interne et externe et deux plaques de fermeture supérieure et inférieure. Cette disposition limite la taille des organes à stocker après colmatage au seul volume des tampons filtrants.

Les tampons filtrants sont légèrement comprimés verticalement par la plaque 30 reliée au conduit 17 concentrique au tube central, pour obliger la totalité du sodium impur sous pression à traverser les tampons filtrants, comme déjà signalé ci-dessus.

Le bouchon inférieur 31 est amovible pour permettre le remplacement de la cartouche filtrante. Il est constitué d'une enveloppe étanche remplie de calorifuge métallique et assurant le guidage du tube central 15 et le supportage de la cartouche sur la virole porteuse. Il est fixé à celle-ci par des agrafes automatiques 32. Toutefois, l'étanchéité entre ce bouchon et le tube central ou la virole porteuse n'est pas totale, pour permettre le remplissage ou la vidange par gravité du dispositif lors de ses manutentions.

Le serpentin de refroidissement 33 est alimenté par un conduit 33A qui traverse de façon étanche la bride-support 1 et la paroi de son logement 4 dans la virole porteuse 2. Une lyre de dilatation 33B permet d'absorber les dilatations différentielles entre le conduit 33A et son serpentin 33, d'une part, et la virole d'autre part. Le serpentin est à double enroulement, les spires d'alimentation et d'évacuation de l'azote de refroidissement étant imbriquées les unes dans les autres, pour réduire l'encombrement. Sa disposition le rend facilement accessible pour réparation en cas de fuite.

Les protections biologiques du dispositif comprennent un bloc massif 34 entourant la partie supérieure de la virole porteuse, et un bac 35 rempli de grenaille à l'intérieur de celle-ci. Le bloc et le bac sont munis des fourreaux nécessaires au passage des tubulures de liaison, connexions mécaniques, alimentations électriques et autres accessoires nécessaires au fonctionnement du dispositif.

La vanne de répartition 36 est disposée dans un pot 37 fixé à la virole porteuse 15 sous la plaque tubulaire inférieure de l'économiseur. Elle est alimentée par les deux conduits concentriques 38 et 39 amenant le sodium purifié, soit de la cartouche filtrante en amont de l'économiseur, soit de celui-ci. Elle assure la répartition du débit total de sodium purifié entre la sortie directe vers la cuve du réacteur et le circuit de retour de l'économiseur. Elle est facilement démontable au travers du fourreau 40 qui assure son guidage et l'étanchéité au niveau de la bride-support. Le sodium sortant de la vanne est refoulé latéralement vers la cuve au-dessous du niveau de sodium par l'orifice 41 pour éviter son contact avec la virole extérieure 7, ce qui pourrait provoquer des chocs thermiques lors de fonctionnements transitoires.

Le fonctionnement de l'appareil est le suivant.

Le sodium chaud à purifier pénètre dans le bas de

0082063

l'appareil dans le tube central 15 qui le conduit à la pompe électromagnétique située dans la partie supérieure. Le sodium refoulé par la pompe redescend à travers l'économiseur, autour de ses tubes.

A la sortie de l'économiseur, le sodium impur pénètre dans la chambre 25, où il est refroidi à la température de cristallisation des oxydes, constituant l'essentiel de ses impuretés, vers 140°C, grâce au serpentin 33 véhiculant l'azote de refroidissement. A la partie inférieure de la chambre 25, le sodium pénètre par l'extérieur dans les tampons de la cartouche filtrante 29, où les oxydes et autres impuretés sont retenus.

Le sodium purifié remonte dans le conduit annulaire 17 coaxial au tube central. Il sort du conduit par la tubulure latérale 18 et traverse la paroi tronconique 27 de la chambre 25 pour arriver à l'entrée des tubes de l'économiseur.

A cet endroit, il se divise en deux parties. L'une passe dans les tubes 11 de l'économiseur, puis revient réchauffée par le conduit 14 et le conduit radial 39 vers la vanne de répartition 36, qui l'évacue dans la cuve du réacteur. L'autre passe directement par le conduit 38 à la vanne de répartition 36, pour y être également évacuée dans la cuve, sans réchauffement préalable dans l'échangeur.

Le circuit de l'indicateur de bouchage 22 est alimenté par un faible débit de sodium prélevé en aval de la pompe 19. Ce sodium est restitué au circuit principal en amont de la pompe.

Bien que le dispositif de purification qui vient d'être décrit ci-dessus en référence aux figures paraisse la forme de réalisation préférable de l'invention, on comprendra que diverses modifications peuvent lui être apportées sans sortir du cadre de l'invention, certains de ses organes pouvant être remplacés par d'autres qui joueraient un rôle technique analogue.

REVENDICATIONS

1/ Dispositif de purification du métal liquide de refroidissement du coeur d'un réacteur nucléaire à neutrons rapides, comprenant une enveloppe calorifugée immergée dans le coeur du réacteur et suspendue à la dalle de protection surmontant celui-ci, un bouchon amovible disposé dans ladite enveloppe et permettant l'accès à l'intérieur de l'enveloppe, et à l'intérieur de celle-ci des moyens de refroidissement d'un courant de métal liquide prélevé dans le coeur du réacteur jusqu'à une température assurant la solidification des impuretés, des moyens (29) de filtration du métal liquide refroidi, des moyens (2A) de réchauffement au moins partiel du métal purifié avant son renvoi dans le coeur du réacteur, des moyens (17) de retour dans la partie supérieure de l'enveloppe du métal purifié sortant des moyens de filtration, des moyens de retour dans le coeur du réacteur du métal purifié en échange de chaleur avec le métal à purifier en débit réglé, et une vanne (36) de répartition du débit de métal liquide purifié entre une fraction passant par les moyens de réchauffement avant d'être renvoyée dans la cuve du réacteur, et une autre fraction renvoyée directement dans cette dernière, disposée dans la partie supérieure de l'enveloppe, et des moyens assurant la circulation du métal liquide à travers ledit dispositif, caractérisé en ce que lesdits moyens assurant la circulation du métal liquide (19, 20) sont disposés par rapport à ses autres éléments de façon à assurer une circulation en siphon non vidangeable de ce métal liquide au-dessus du niveau (42) de métal liquide baignant le coeur du réacteur nucléaire.

2/ Dispositif selon la revendication 1, caractérisé en ce que les moyens pour assurer une circulation en siphon du métal liquide à purifier comprennent une pompe électromagnétique (19) disposée au-dessus de l'extrémité supérieure des moyens de retour dans la partie supérieure de l'enveloppe du métal purifié sortant des moyens de filtration, et des moyens (23) pour assurer et maintenir l'amorçage de cette pompe.

0082063

3/ Dispositif selon les revendications 1 ou 2, caractérisé en ce que les moyens de réchauffement du métal liquide purifié sont constitués par un échangeur (2A) à faisceau tubulaire (11) disposé au-dessus de la zone supérieure des moyens de retour dans la partie supérieure de l'enveloppe du métal purifié sortant des moyens de filtration, dans une enceinte (25) alimentée par la circulation de métal liquide à refroidir et purifier redescendant de la partie supérieure du siphon.

4/ Dispositif selon la revendication 3, caractérisé en ce que la vanne (36) de répartition du débit de métal liquide purifié renvoyé dans le coeur du réacteur est amovible et disposée à l'extérieur de l'enveloppe calorifugée (7).

5/ Dispositif selon l'une des revendications 2 à 4, caractérisé en ce qu'il comprend un indicateur (22) de bouchage donnant l'indication de la pureté du métal liquide, relié à la circulation de celui-ci en deux points proches de la pompe électromagnétique, en amont et en aval de celle-ci.

6/ Dispositif selon l'une des revendications 1 à 5, caractérisé en ce que la partie du dispositif située sous le niveau de métal liquide dans la cuve du réacteur nucléaire est constituée uniquement par les moyens de filtration et leur isolation thermique.

0082063

FIG.1A

# FIG.1B

0082063

Office européen
des brevets

**RAPPORT DE RECHERCHE EUROPEENNE**

Numéro de la demande

EP  82 40 2228

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 246 942 (C.E.A.)<br>* Page 2, lignes 1-27; page 8, lignes 6-11; figure 2 * | 1,4,5 | G 21 C  19/30 |
| A | US-A-3 558 122 (R.A. JAROSS)<br>* Colonne 1, lignes 74-75; colonne 2, lignes 1-26; figure 1 * | 1,3,6 | |
| A | FR-A-1 549 434 (C.E.A.)<br>* Page 1, colonne de droite, dernier alinéa; page 2, colonne de gauche; figures * | 1,3 | |
| A | FR-A-2 080 956 (U.S.A.E.C.)<br>* Page 4, lignes 1-35; figure unique * | 1,3,6 | |
| | | | DOMAINES TECHNIQUES RECHERCHES (Int. Cl. ³) |
| D,A | FR-A-2 395 570 (C.E.A. - STEIN IND.)<br>* Page 2, lignes 33-40; page 3, lignes 1-26; figures 1A,1B * | 1 | G 21 C  19/30 |

---

Le présent rapport de recherche a été établi pour toutes les revendications

| Lieu de la recherche<br>LA HAYE | Date d'achèvement de la recherche<br>15-03-1983 | Examinateur<br>GIANNI G.L.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& . membre de la même famille, document correspondant

OEB Form 1503 03 82